# EUROPÄISCHE PATENTSCHRIFT

(11) **EP 1 662 346 B1**
(45) Veröffentlichungstag und Bekanntmachung des Hinweises auf die Patenterteilung: **06.07.2011**
(21) Anmeldenummer: 05025701.3
(22) Anmeldetag: 25.11.2005
(51) Int. Cl.: G05B 19/042

(54) **Verfahren zur sicheren Parametrierung eines Feldgerates der Automatisierungstechnik**
Method for secure parametrisation of a field device in automation technology
Procédé de paramétrisation sécurisée d'un dispositif de terrain de la technique d'automatisation

(30) Priorität: 26.11.2004 DE 102004057298
(43) Veröffentlichungstag der Anmeldung: 31.05.2006
(73) Patentinhaber: ENDRESS + HAUSER WETZER GmbH + Co. KG, 87484 Nesselwang (DE)
(72) Erfinder: Härle, Thomas, 87466 Oy-Mittelberg (DE); Konrad, Stephan, 87669 Rieden (DE); Zwick, Oliver, 87471 Durach (DE)
(74) Vertreter: Andres, Angelika Maria

(56) Entgegenhaltungen:
- GB-A- 2 260 627
- GB-A- 2 283 116

## Beschreibung

In der Prozessautomatisierungstechnik werden vielfach Feldgeräte eingesetzt, die zur Erfassung und / oder Beeinflussung von Prozessvariablen dienen. Beispiele für derartige Feldgeräte sind Füllstandsmessgeräte, Massendurchflussmessgeräte, Druck- und Temperaturmessgeräte, pH-Redoxpotential- Messgeräte, Leitfähigkeitsmessgeräte etc., die als Sensoren die entsprechenden Prozessvariablen Füllstand, Durchfluss, Druck, Temperatur, pH-Wert bzw. Leitfähigkeitswert erfassen.

Neben derartigen reinen Messgeräten sind auch Systeme bekannt, die noch zusätzliche weitere Aufgaben erfüllen. Zu nennen sind hier Elektrodenreinigungssysteme, Kalibriersysteme sowie Probennehmer.

Ebenfalls als Feldgeräte werden Ein-/Ausgabeeinheiten so genannte Remote I/Os bezeichnet.

Zur Beeinflussung von Prozessvariablen dienen Aktoren, z. B. Ventile, die den Durchfluss einer Flüssigkeit in einem Rohrleitungsabschnitt steuern oder Pumpen, die es erlauben den Füllstand in einem Behälter zu verändern.

Eine Vielzahl solcher Feldgeräte wird von der Firma Endress + Hauser® hergestellt und vertrieben.

Häufig sind Feldgeräte über einen Feldbus (Profibus®, Foundation®-Fieldbus, HART® etc.) mit übergeordneten Einheiten z. B. Leitsystemen bzw. Steuereinheiten verbunden. Diese übergeordneten Einheiten dienen zur Prozesssteuerung, Prozessvisualisierung, Prozessüberwachung.

Insbesondere in chemischen Anlagen sind Feldgeräte vielfach in sicherheitskritische Prozessabläufe integriert. Änderungen an den Einstellungen einzelner Feldgeräte können erhebliche Auswirkungen auf die Prozesssicherheit haben. Beispiele für solche Einstellungen sind Grenzwerte wie Temperatur, Füllstand etc..
Diese Parameter können entweder am Feldgerät direkt über eine Tastatur (Vor-Ort-Bedienung) oder über eine Bedieneinheit (z. B. Laptop oder Hart-Handheld), die mit dem Feldgerät direkt oder über den Feldbus verbunden wird, eingegeben werden.

Eine Möglichkeit der Kontrolle der eingegebenen Parameter bei der Eingabe Vor-Ort besteht darin, jedes einzelne Zeichen (Zahlen sowie Buchstaben) in einer Anzeigeeinheit (z. B. einem Display) am Feldgerät anzuzeigen und nach der Eingabe alle Werte noch einmal anzuzeigen und vom Anwender bestätigen zu lassen (wie z.B. in der Patentschrift GB 2283116).
Bei dieser Methode ist die Parameter-Eingabe und die Überprüfung der Richtigkeit der Parameter-Eingabe wenig benutzerfreundlich. Fehleingaben können nicht ausgeschlossen werden.

Bei der Eingabe der Parameter über eine separate Bedieneinheit besteht die Möglichkeit des Schreibens und Gegenlesens der Daten in der Bedieneinheit. Das Bedienprogramm schreibt die vom Anwender eingegebenen Daten via Service-Schnittstelle oder Bus in das Feldgerät, es liest die im Feldgerät gespeicherten Daten wieder aus und vergleicht diese mit den Eingabewerten. Dazu können die Daten zum Erhöhen der Sicherheit beim Schreiben und Lesen mit unterschiedlichen Datentypen übertragen um systematische Fehler im Übertragungsprotokoll auszuschließen. Der Übertragungsweg ist beim Schreiben und beim Lesen jedoch immer der gleiche (RS232-Schnittstelle oder der Feldbus). Diese Methode ist zwar sicherer als die oben angegebene Methode bei der direkten Eingabe der Parameter am Feldgerät und Überprüfung über die Anzeigeeinheit, jedoch ist hier immer eine Verbindung zwischen Feldgerät und einer Bedieneinheit notwendig.

Aufgabe der Erfindung ist es, ein Verfahren zur sicheren Geräteparametrierung anzugeben, das die oben genannten Nachteile nicht aufweist, das insbesondere Fehleingaben bei der Parametrierung mit hoher Sicherheit ausschließt.

Gelöst wird diese Aufgabe durch das in Anspruch 1 angegebene Verfahren.

Vorteilhafte Weiterentwicklungen der Erfindung sind in den Unteransprüchen angegeben.

Die wesentliche Idee der Erfindung besteht darin, die Pparameter, die am Feldgerät direkt oder über eine Bedieneinheit, die mit dem Feldgerät verbunden ist, eingegeben werden, zusätzlich an einem Kontrollgerät einzugeben. Im Feldgerät und im Kontrollgerät läuft jeweils dasselbe Prüfprogramm ab, das aus den eingegebenen Parametern jeweils einen Prüfwert generiert. Der vom Kontrollgerät ermittelte Prüfwert muss dann am Feldgerät eingegeben werden und nur wenn der im Feldgerät berechnete Prüfwert mit dem vom Kontrollgerät berechneten und am Feldgerät eingegebene Prüfwert übereinstimmt, wird die Eingabe der Parameter akzeptiert.

In einer Weiterentwicklung der Erfindung ist das Prüfprogramm ein CRC-Checksummenprogramm.

In einer Weiterentwicklung der Erfindung werden die angegebenen Parameter im Kontrollgerät zu Dokumentationszwecken gespeichert.

Als zusätzliche Parameter können die Seriennummer, der Name des Anwenders, die Messstellenbezeichnung (TAG-Name) sowie das Datum eingegeben werden.

Nachfolgend ist die Erfindung anhand eines in der Zeichnung dargestellten Ausführungsbeispiels näher erläutert.

### Es zeigen:

- Fig. 1: schematische Darstellung eines Netzwerks der Prozessautomatisierungstechnik mit mehreren Feldgeräten;
- Fig. 2: Blockschaltbild eines Feldgerätes;
- Fig. 3: Flussdiagramm.

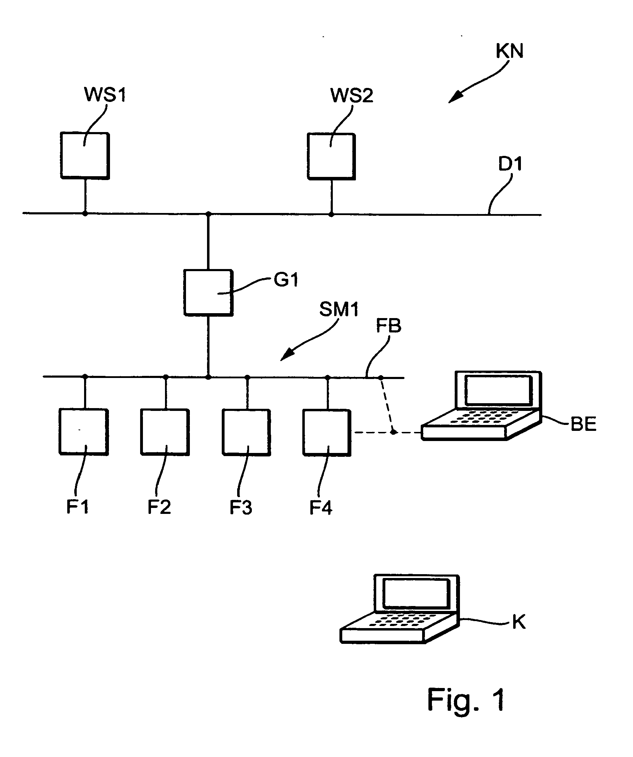

In Fig. 1 ist ein Kommunikationsnetzwerk der Prozessautomatisierungstechnik näher dargestellt. An einen Datenbus D1 sind mehrere Rechnereinheiten (Workstations) WS1, WS2 angeschlossen. Diese Rechnereinheiten können als übergeordnete Einheiten (Leitsystem bzw. Steuereinheit) zur Prozessvisualisierung, Prozessüberwachung und zum Engineering aber auch zum Bedienen und Überwachen von Feldgeräten dienen. Der Datenbus D1 arbeitet z. B. nach dem Profibus® DP-Standard oder nach dem HSE (High Speed Ethernet)- Standard der Foundation® Fieldbus. Über ein Gateway 1, das auch als Linking Device oder als Segmentkoppler bezeichnet wird, ist der Datenbus D1 mit einem Feldbussegment SM1 verbunden. Das Feldbussegment SM1 besteht aus mehreren Feldgeräten F1, F2, F3, F4 die über einen Feldbus FB miteinander verbunden sind. Bei den Feldgeräten F1, F2, F3, F4 können es sich sowohl um Sensoren oder um Aktoren handeln. Der Feldbus FB arbeitet entsprechend nach einem der bekannten Feldbus-Standards Profibus, Foundation Fieldbus oder HART.
Zur Bedienung des Feldgerätes über den Feldbus FB bzw. über eine am Feldgerät vorgesehene Service-Schnittstelle dient eine Bedeineinheit BE. Zur Überprüfung der Parametereingabe ist ein unabhängiges Kontrollgerät K (z. B. Laptop, Handheld oder ein stationärer PC) vorgesehen.

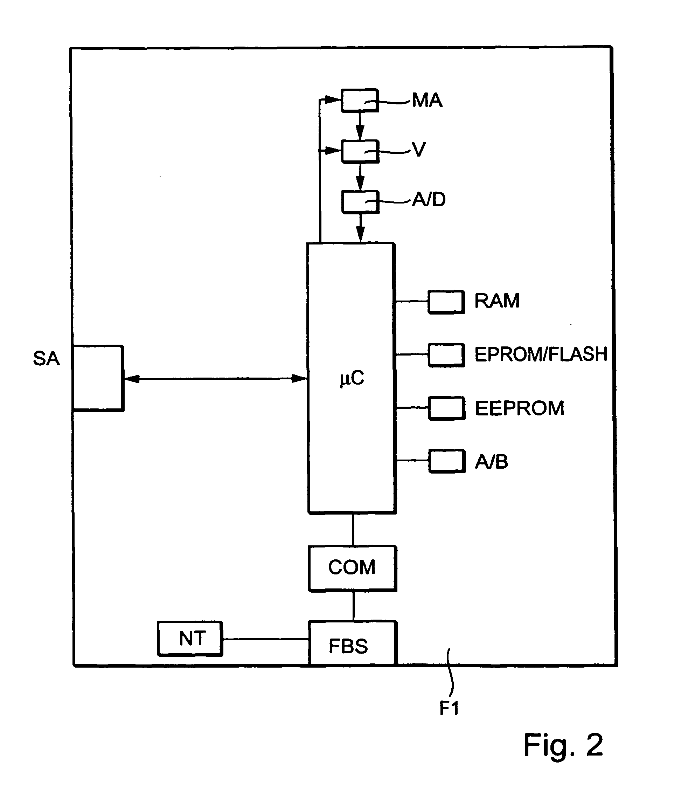

In Fig. 2 ist ein Blockschaltbild eines Feldgerätes z. B. F1 näher dargestellt. Eine Mikroprozessor µP ist zur Messwertverarbeitung über einen Analog-Digital-Wandler A/D und einen Verstärker V mit einem Messaufnehmer MA verbunden, der eine Prozessvariable (z. B. Druck, Durchfluss oder Füllstand) erfasst. Der Mikroprozessor µP ist mit mehreren Speichern verbunden. Ein Speicher dient als temporärer (flüchtiger) Arbeitspeicher RAM. Ein weitere Speicher EPROM oder Flash-Speicher FLASH dient als Speicher für das im Mikroprozessor µP auszuführende Steuerprogramm. In einem nichtflüchtigen beschreibbaren Datenspeicher z. B. EEPROM-Speicher werden Parameterwerte (z. B. Kalibrierdaten etc.) abgespeichert.

Das im Mikroprozessor µP ablaufende Steuerprogramm definiert die anwendungsbezogenen Funktionalitäten des Feldgerätes (Messwertberechnung, Hüllkurvenauswertung, Linearisierung der Messwerte, Diagnoseaufgaben).

Weiterhin ist der Mikroprozessor µP mit einer Anzeigebedieneinheit A/B (z. B. LCD-Anzeige mit mehreren Drucktasten) verbunden.

Zur Kommunikation mit dem Feldbus-Segment SM1 ist der Mikroprozessor µP über einen Kommunikations-Controller COM mit einer Feldbusschnittstelle FBS verbunden. Ein Netzteil NT liefert die notwendige Energie für die einzelnen Elektronikkomponenten des Feldgerätes F1. Es kann vom Feldbus FB gespeist werden oder von einer anderen Energiequelle. Die Versorgungsleitungen für die Energieversorgung der einzelnen Komponenten im Feldgerät sind der Übersichtlichkeit halber nicht eingezeichnet.

Der Mikroprozessor µP ist weiterhin mit einer Servicesteckeranschluss SA einer Service-Schnittstelle verbunden, an die die Bedieneinheit BE anschließbar ist. Die Kommunikation über die Service-Schnittstelle erfolgt normalerweise mit einem proprietären Datenübertragungsprotokoll.

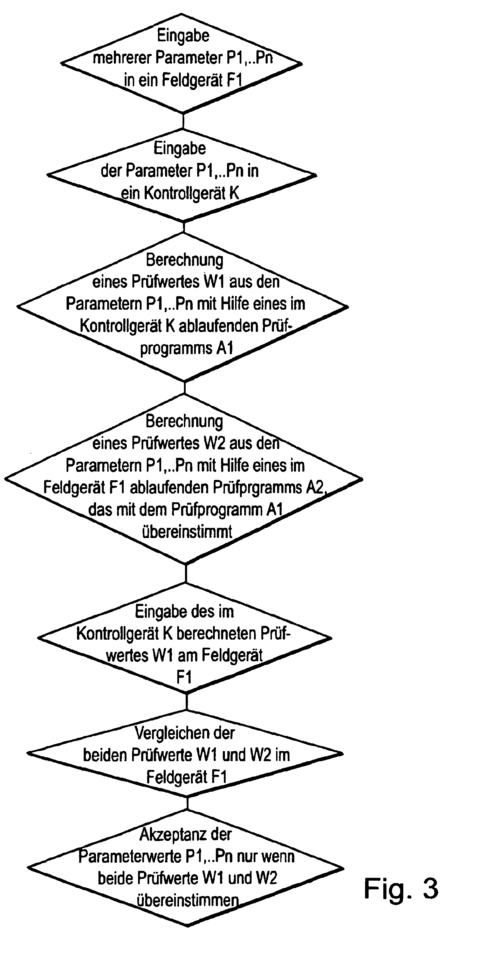

Nachfolgend ist das erfindungsgemäße Verfahren anhand des in Figur 3 dargestellten Flussdiagramms näher erläutert. In einem ersten Verfahrensschritt werden die Parameter P1, P2 ... Pn am Feldgerät direkt über eine am Feldgerät vorgesehene Anzeige/Bedieneinheit A/B oder über die mit dem Feldgerät verbundene Bedieneinheit BE vom Anwender eingegeben.

Beispiele für die Parameter P1, P2 ...Pn sind z.B. Schaltpunkt , Rückschaltpunkt, Schaltverzögerung bei einem Schaltausgang oder Messpanne, Offset, Dämpfung bei einem Analogausgang etc.. (Es kann auch nur ein einziger Parameter eingegeben werden).
Die Parameter P1, P2 ... Pn werden ebenfalls am Kontrollgerät K eingegeben. Im Kontrollgerät K läuft ein Prüfprogramm A1 ab, das aus den eingegebenen Parametern P1, P2 ... Pn einen Prüfwert W1 berechnet. Im Feldgerät F1 läuft ein Prüfprogramm A2 ab, das gleich dem Prüfprogramm A1 ist.

In einem weiteren Verfahrensschritt wird aus den eingegebenen Parametern P1, P2 ... Pn ein Prüfwert W2 im Feldgerät berechnet. Der im Kontrollgerät berechnete Prüfwert W1 wird am Feldgerät eingegeben. Im Feldgerät F1 werden die beiden Prüfwerte W1 und W2 verglichen und nur bei einer Übereinstimmung dieser beiden Prüfwerte erfolgt die Akzeptanz der gegebenen Parameter.

Unterscheiden sich die Prüfwerte so stimmen offensichtlich die Parameter im Feldgerät nicht mit denen am Kontrollgerät K eingegebenen überein. Die Eingaben müssen deshalb wiederholt werden. Wie bereits erwähnt, kann es sich bei dem Prüfprogramm A1, bzw. A2 um ein CRC-Checksummenprogramm handeln. Ebenfalls können die Parameter P1, P2 ... Pn im Kontrollgerät K zur Dokumentationzwecken gespeichert oder ausgedruckt werden. Durch die Eingabe von zusätzlichen Werten wie die Seriennummern des Feldgerätes, der Name des Anwenders, Messstellenbezeichnung (TAG/Name) sowie dem aktuellen Eingabedatum können zusätzliche Kontrollinformationen zur Prüfung verwendet werden.

Mit Hilfe des erfindungsgemäßen Verfahrens ist eine sichere Parametereingabe bei Feldgeräten der Automatisierungstechnik möglich. Die Wahrscheinlichkeit, dass die gleichen Fehler bei der Parametereingabe für das Feldgerät F1 und am unabhängigen Kontrollgerät K gemacht werden, ist extrem gering. Die Eingabe am Kontrollgerät K kann auch von einer separaten Person vorgenommenen werden.

Das erfindungsgemäße Verfahren bietet eine Vielzahl von Vorteilen. Für die sichere Parametereingabe über Vor-Ort-Bedienung ist keine Verbindung zwischen zu einem Feldbus notwendig. Bei einer Parametereingabe über die Bedieneinheit ist auch ein systematischer Fehler im Übertragungsweg ausgeschlossen, weil zwei unterschiedliche Wege verwendet werden.
Über den im Prüfprogramm verwendeten Algorithmus kann das Maß an Sicherheit erhöht werden.

Der CRC-Check ist allgemein anerkannt und kann zum Beispiel im Hinblick auf SIL-Anwendungen eingesetzt werden. Für die Erstellung einer SIL Konformitätserklärung muss eine Bewertung der Wirksamkeit bzw. Aufdeckungswahrscheinlichkeit der Sicherheitsmassnahme durchgeführt werden. In der IEC 61508 sind unter anderem verschieden CRC-Algorithmen genannt und bewertet.

Weiterhin ist das Verfahren sehr bedienfreundlich, da es keine optische Überprüfung der eingegebenen Parameterwerte erfordert. Flüchtigkeitsfehler und Zahlendreher werden durch das erfindungsgemäße Verfahren ausgeschlossen. Systematische Fehler sind ebenfalls ausgeschlossen, da die Berechnung der Prüfwerte mit zwei getrennten Programmen erfolgt.

## Patentansprüche

1. Verfahren zur sicheren Dateneingabe bei Feldgeräten der Automatisierungstechnik,
**gekennzeichnet, durch** folgende Verfahrensschritte:
A. Eingabe von Parametern (P1, P2,..Pn) für ein Feldgerät (F1)
B. Zusätzliche Eingabe der Parameter (P1, P2,..Pn) an einem Kontrollgerät (K)
C. Berechnung eines ersten Prüfwertes (W1) aus den Parametern (P1, P2,..Pn) mit Hilfe eines im Kontrollgerät (K) ablaufenden ersten Prüfprogramms (A1)
D. Berechnung eines zweiten Prüfwertes (W2) aus den Parametern (P1, P2,..Pn) mit Hilfe eines im Feldgerät (F1) ablaufenden zweiten Prüfprogramms (A2), das mit dem ersten Prüfprogramm (A1) übereinstimmt
E. Eingabe des im Kontrollgerät (K) berechneten ersten Prüfwertes (W1) am Feldgerät (F1)
F. Vergleichen des ersten und des zweiten Prüfwertes (W1, W2) im Feldgerät (F1)
G. Akzeptanz der Parameterwerte (P1, P2,..Pn) nur wenn der erste und der zweite Prüfwert (W1, W2) übereinstimmen.

2. Verfahren nach Anspruch 1, **dadurch gekennzeichnet, dass** das erste und das zweite Prüfprogramm (A1, A2) ein CRC-Checksummen-Programm ist.

3. Verfahren nach einem der vorhergehenden Ansprüche, **dadurch gekennzeichnet, dass** die Parameter (P1, P2,..Pn) im Kontrollgerät (K) zu Dokumentationszwecken gespeichert werden.

4. Verfahren nach einem der vorhergehenden Ansprüche, **dadurch gekennzeichnet, dass** neben den Parametern (P1, P2, .. Pn) noch weitere Eingaben, insbesondere die Serien-Nummer des Feldgerätes (F1), der Name der Bedienperson, die Messstellenbezeichnung, das Datum, getätigt werden, die in die Prüfung einbezogen werden.

5. Verfahren nach einem der vorhergehenden Ansprüche, **dadurch gekennzeichnet, dass** die Parameter (P1, P2, .. Pn) direkt am Feldgerät (F1) oder über eine mit dem Feldgerät (F1) verbundene Bedieneinheit (BE), eingeben werden.

6. Feldgerät angepasst zur Durchführung des Verfahrens nach einem der vorherigen Ansprüche.

7. Kontrollgerät angepasst zur Durchführung des Verfahrens nach einem der Ansprüche 1-5.

8. Anordnung bestehend aus einem Feldgerät nach Anspruch 6 und einem Kontrollgerät nach Anspruch 7.

## Claims

1. Process for secure data entry for field devices used in automation engineering, **characterized in** having the following process steps:
A. Entry of parameters (P1, P2...Pn) for a field device (F1)
B. Additional entry of parameters (P1, P2...Pn) at a control device (K)
C. Calculation of a first check value (W1) from the parameters (P1, P2...Pn) using a first check program (A1) running in the control device (K)
D. Calculation of a second check value (W2) from the parameters (P1, P2...Pn) using a second check program (A2) running in the field device (F1), where said second check program corresponds to the first check program (A1)
E. Entry of the first check value (W1) at the field device (F1), where said first check value is calculated in the control device (K).
F. Comparison of the first and second check value (W1, W2) in the field device (F1)
G. Acceptance of the parameter values (P1, P2...Pn) only if the first and second check value (W1, W2) match

2. Process as per Claim 1, **characterized in that** the first and second check program (A1, A2) is a CRC checksum program.

3. Process as per one of the previous claims, **characterized in that** the parameters (P1, P2...Pn) in the control device (K) are used for documentation purposes.

4. Process as per one of the previous claims, **characterized in that** additional information is entered, particularly the serial number of the field device (F1), the name of the operator, the tag name, the date, which are then included in the checking routine.

5. Process as per one of the previous claims, **characterized in that** the parameters (P1, P2...Pn) are entered directly at the field device (F1) or via an operating unit (BE) connected to the field device (F1).

6. Field device adapted to perform the process as per one of the previous claims.

7. Control device adapted to perform the process as per one of the previous claims 1-5.

8. Arrangement comprising a field device as per Claim 6 and a control device as per Claim 7.

## Revendications

1. Procédé destiné à la saisie sûre de données dans le cas d'appareils de terrain de la technique d'automatisation,
**caractérisé par** les étapes de procédé suivantes :
A. Saisie de paramètres (P1, P2,...Pn) pour un appareil de terrain (F1)
B. Saisie supplémentaire des paramètres (P1, P2,...Pn) sur un appareil de contrôle (K)
C. Calcul d'une première valeur de contrôle (W1) à partir des paramètres (P1, P2,...Pn) à l'aide d'un premier programme de contrôle (A1) exécuté dans l'appareil de contrôle (K)
D. Calcul d'une deuxième valeur de contrôle (W2) à partir des paramètres (P1, P2,...Pn) à l'aide d'un deuxième programme de contrôle (A2) exécuté dans l'appareil de terrain (F1), lequel programme coïncide avec le premier programme de contrôle (A1)
E. Entrée sur l'appareil de terrain (F1) de la première valeur de contrôle (W1) calculée dans l'appareil de contrôle (K)
F. Comparaison de la première et de la deuxième valeur de contrôle (W1, W2) dans l'appareil de terrain (F1)
G. Acceptation des valeurs des paramètres (P1, P2,...Pn) uniquement lorsque la première et la deuxième valeur de contrôle (W1, W2) coïncident.

2. Procédé selon la revendication 1, **caractérisé en ce que** le premier et le deuxième programme de contrôle (A1, A2) sont des programmes de somme de contrôle CRC.

3. Procédé selon l'une des revendications précédentes, **caractérisé en ce que** les paramètres (P1, P2,...Pn) sont enregistrés à des fins de documentation dans l'appareil de contrôle (K).

4. Procédé selon l'une des revendications précédentes, **caractérisé en ce que**, outre les paramètres (P1, P2,...Pn), d'autres entrées, notamment le numéro de série de l'appareil de terrain (F1), le nom de l'opérateur, la désignation du point de mesure, la date, sont effectuées, lesquelles entrées sont intégrées dans le contrôle.

5. Procédé selon l'une des revendications précédentes, **caractérisé en ce que** les paramètres (P1, P2,...Pn) sont entrés directement sur l'appareil de terrain (F1) ou par l'intermédiaire d'une unité de commande (BE) reliée à l'appareil de terrain (F1).

6. Appareil de terrain adapté en vue de la réalisation du procédé selon l'une des revendications précédentes.

7. Appareil de contrôle adapté en vue de la réalisation du procédé selon l'une des revendications 1 à 5.

8. Configuration constituée d'un appareil de terrain selon la revendication 6 et un appareil de contrôle selon la revendication 7.
